# EUROPÄISCHE PATENTSCHRIFT

(11) **EP 0 664 326 B1**
(45) Veröffentlichungstag und Bekanntmachung des Hinweises auf die Patenterteilung: **14.04.1999**
(21) Anmeldenummer: 94120024.8
(22) Anmeldetag: 17.12.1994
(51) Int. Cl.: F16B 11/00

(54) **Ein Verbindungssystem von Holzwerkstoffen und Werkstoffen jeder Art mit Hilfe von Klebern**
System for assembling wooden materials and materials of any kind using adhesives
Système de fixation pour matériaux en bois et matériaux de tout type au moyen de colle

(30) Priorität: 18.12.1993 DE 9319497 U
(43) Veröffentlichungstag der Anmeldung: 26.07.1995
(73) Patentinhaber: Bathon, Leander Dr., D-63768 Hösbach (DE)
(72) Erfinder: Bathon, Leander Dr., D-63768 Hösbach (DE)
(74) Vertreter: Späth, Dieter, Dipl.-Ing.

(56) Entgegenhaltungen:
- EP-A- 0 263 350
- EP-A- 0 620 332
- CH-A- 673 305
- DE-U- 9 319 497
- US-A- 1 516 975

## Beschreibung

Die Erfindung betrifft ein Verbindungssystem von Holzwerkstoffen und Werkstoffen jeder Art mit Hilfe von Klebern zur Aufnahme von Zug- und Druckkräften, Querkräften und Momenten, sowie ein Verfahren zur Herstellung des Verbindungssystems. Die Erfindung findet ihre Anwendung in jeglichen Systemen, Konstruktionen, Gebäuden, Bauvorhaben, Objekten, etc. die Holzwerkstoffe als statische, konstruktive, und/oder ästhetische Komponenten enthalten. Jedes System, Konstruktion, Gebäude, Objekt, etc. überträgt Kräfte und/oder Momente irgentwelcher Art. Diese werden nämlich durch die Anziehungskraft der Planeten verursacht. Diese auftretenden Kräfte und/oder Momente müssen z.B. von einem Bauteil zum anderen, von einem System zum anderen, von einer Konstruktion zur anderen übertragen werden. Diese Übertragung von Kräften und/oder Momenten geschieht durch Verbindungen in den verschiedensten Formen und Variationen.

Es ist bekannt, Verbindungen von Holz mit Schlitzblechen durch vernageln, verbolzen, oder verdübeln herzustellen. Hierzu werden die Holzwerkstoffe vorgefertigt geschlitzt und anschließend das Stahlblech durch Bolzen, Dübeln, etc. mit dem Holzwerkstoff verbunden. Die Erfahrung zeigt, daß diese Verbindungen eine Reihe von Nachteilen aufweisen. Zunächst sind diese Verbindungen sehr kostenintensiv. Die Kosten liegen in den Materialien und in der Herstellung. Nicht selten werden Schlitzblechverbindungen hergestellt, die z.B. 40 Stück Paßschrauben besitzen. Das bedeutet, daß 40 Paßschrauben gefertigt werden müssen, 40 Löcher in das Stahlblech und Holz gebohrt werden müssen, 40 Paßschrauben eingetrieben und angezogen werden müssen. All diese Arbeitsschritte kosten Zeit und Geld.

Als weiterer Nachteil einer derartigen Verbindung hat sich herausgestellt, daß die Vorfertigungen im Holzwerkstoff anschließend oft nicht mit dem Stahlblech oder Dübeln übereinstimmen. Dies ist in erster Linie dadurch begründet, daß Holz infolge seines heterogenen Wachstums ständig arbeitet. Wasser, Dampf, Witterungseinflüsse etc. bedingen in Grenzen Schwankungen im Holzwerkstoff, so daß Bohrungen, Schlitze etc. ständig einem Mindermaß oder Übermaß unterworfen sind. Dadurch bedingt können Holz und Stahl nicht in großen Mengen vorgefertigt und erst zu einem späteren Zeitpunkt nach Anlieferung miteinander verbunden werden.

Desweiteren zeigen Untersuchungen, daß mechanische Verbindungen, wie z.B. Schlitzbleche, nur einen Teil der tatsächlichen Kapazität des Holzwerkstoffes ausnutzen. Dies ist darin begründet, daß die anzuschließende Kraft nur durch den Nettoquerschnitt des Holzwerkstoffes fließen kann. Die Verbindungsteile, wie Schlitzblech, Bolzen, Stabdübel etc. reduzieren allerdings die Nettoquerschnittsfläche. Erfahrungswerte haben gezeigt, daß z.B. ein Zugkraftanschluß nur einen Wirkungsgrad von ca. 60% hat. Das bedeutet, die Stahl-Holz-Verbindung überträgt nur 60% der Kapazität des Holzquerschnitts.

Ein weiterer Nachteil von mechanischen Verbindungsmitteln sind die relativ großen Verformungen von Holztragsystemen. Jede mechanische Verbindung ist eine punktweise Verbindung. Punktweise Verbindungen in Holzwerkstoffen werden durch Lastspitzen, sowie wiederkehrende Lastfälle in Grenzen nachgiebig. Ein einmalig erzielter Schlupf ist irreparabel und vergrößert sich im Gegenteil bei einer Wiederkehr der Lastspitze. Dieses Verhalten ist besonders bei dynamischer Beanspruchung wie z.B. Erdbeben, Transport von Systemteilen, etc. zu finden.

Ein weiterer Nachteil von Schlitzblechverbindungen tritt in Brandfällen auf. Sichtbare Stahlverbindungen wirken nicht nur unästhetisch, sondern reduzieren auch drastisch die Standsicherheit eines Bauteils im Brandfall.

Technisch ungelöst ist auch das Problem von Bohrungen, die in Holz und Stahl gleichzeitig ausgeführt werden. Dieses liegt an den unterschiedlichen Spänen beim Bohren. trifft ein Bohrer nach dem Bohren von Holz auf Stahl, so beschädigen die Stahlspäne die Lochwandung im Holz und es kann anschließend beim Verdübeln keine korrekte statische Aussage darüber gemacht werden, wie die Kräfte in der Verbindung verlaufen.

Es ist auch bekannt, Verbindungen zwischen Holz und Stahl durch Kleber herzustellen. Sachdienliche Angaben macht das Forschungsvorhaben 14-36287 der Forschungs- und Materialprüfungsanstalt Baden-Würtembergs über "Kostensparende Holzverbindungen durch eingeleimte Metallbleche unter Verwendung neuartiger Kleber mit erhöhter Leimfugendicke". Das Forschungsvorhaben zeigt die Einflüsse von Temperatur- und Leimfugendickenänderungen auf die Festigkeit der Verbindung, gibt jedoch keine Lösungsmöglichkeiten zur Herstellung von derartigen Verbindungen für den Einsatz außerhalb des Versuchslabors.

Durch die DE 31 32 828 ist ein Verbindungsteil für Hirnholzanschlüsse in Holzstäben bekannt, indem ein Metallrohr in eine Bohrung von ringförmigem Querschnitt eingeleimt ist. Eine derartige Verbindungsform hat den Nachteil, das heterogene Verhalten des Holzes nicht zu berücksichtigen und demnach im Gebrauchszustand unter normalen klimatischen Bedingungen unkontrollierte Bruchstellen hervorzurufen. Des weiteren ist als Nachteil aufzuführen, daß eine Profilierung und Leimnuten nicht ausreichen um eine sichere Verteilung des gesamten Leimes zu gewährleisten. Durch DE 31 32 828 ist ebenfalls bekannt, in Stirnflächen von Holzstäben einen kreuzförmigen Schlitz einzuschlitzen, um darin speziell geformte Metallstücke einzuleimen. Diese Ausführung sollte allerdings vermieden werden, da sie eine Spannungsüberlagerung an den Kreuzungspunkten der Metallstücke erzeugt und somit eine Bruchfolge hervorrufen kann.

Durch DE 25 33 342 ist eine Verbindung von mindestens zwei Elementen mittels Stiften und Verkleben bekannt. Diese Art von Verbindung wurde zur Erhöhung der Steifigkeit großer Flächen in Schiffen entwickelt.

Durch DT 1 485 811 ist ein Verfahren zum Verankern eines Klebstoff-Films auf einer im wesentlichen glatten Werkstückoberfläche bekannt. Dieses Verfahren wurde entwickelt, um das Verankern eines Klebstoff-Films auf der Oberfläche eines, vorzugsweise flexiblen Werkstückes, wie z.B. Leder zu erzielen, auf dem Klebstoff nicht gut oder überhaupt nicht haften bleibt. Zu diesem Zweck werden Einbohrungen oder Einkerbungen in dem Werkstück vorgenommen.

Durch EP 0 044 057 B1 ist eine Knotenpunktverbindung für Holzstäbe von Fachwerken, insbesondere Raumfachwerken bekannt, bei welcher einstückige Halteglieder für Gewindebolzen in den Stirnenden der Holzstäbe eingeklebt sind. Diese Halteglieder zeigen wiederum den Nachteil das heterogene Verhalten des Holzes nicht zu berücksichtigen. Darüber hinaus sind die Halteglieder in einer Ausführung so gewählt, daß sie über die Hälfte der Bruttoquerschnittsfläche des Holzes einnehmen. Diese Querschnittsschwächung erlaubt nur noch einen Bruchteil des ursprünglichen Kraftflusses des Holzstabes und ist somit keine vorteilhafte alternative zu herkömmlichen Verbindungsmethoden.

Aus der CH-A 673 305 ist eine Knotenverbindung für Holz-Fachwerkträger bekannt. Die Knotenverbindung umfaßt Verbinder mit einem Stahlrohr, an dem eine Halteplatte angebracht ist. Das Stahlrohr wird in eine hohlzylindrische Nut in einem Holzträger eingesetzt und mit Epoxidharz verklebt. An den Halteplatten werden die Verbinder mehrerer Holzträger zu einem Fachwerkknoten verbunden. Das Stahlrohr der Verbinder besteht aus einem steifen Material und ist zudem formstabil und somit unverformbar. Dies führt beim Arbeiten der Holzträger durch Temperatur- und Feuchtigkeitsschwankungen zu Spannungen sowohl in der Klebeschicht als auch im Holz selbst. Die Belastbarkeit der Verbindung wird dadurch herabgesetzt, die Klebstoffschicht kann allein infolge des Arbeitens der Holzträger, also bei unbelastetem Fachwerk, einreißen.

Aufgabe der Erfindung ist es, ein Verbindungssystem zwischen Holzwerkstoffen und Werkstoffen jeder Art und ein Verfahren zur Herstellung dieser neuartigen Verbindung zu schaffen, die die vorherig erwähnten Nachteile nicht aufweist.

Gelöst wird die Aufgabe durch die kennzeichnenden Merkmale des Hauptanspruchs. In den Unteransprüchen werden Sonderlösungen aufgezeigt.

Das Verbindungssystem der hier beschriebenen Erfindung von Holzwerkstoffen und Werkstoffen jeder Art mit Hilfe von Klebern ermöglicht einen wirtschaftlicheren, sichereren, und ästhetischeren Einsatz von Holzwerkstoffen.

Zu diesem Zweck werden Anker gemäß dem Einsatzzweck des Verbindugssystem und der angreifenden Lasten bestimmt. Da Kleberverbindungen die auftretenden Lasten nur über die Klebefläche weiterleiten können, müssen demnach die Anker so gewählt werden, daß ein Maximum an Verbindungsfläche zwischen Anker und Holzwerkstoff entsteht, gleichzeitig aber ein Minimum an Querschnittsschwächung erzielt wird. Die Anker sowie deren Klebefläche sind so gestaltet, daß sie über den gesamten Verwendungszeitraum eine standsichere Verbindung darstellen.

Die hier beschriebenen Holzwerkstoffe beinhalten jegliche natürlich gewachsenen Hölzer, wie z.B. Hartholz, Weichholz, Laubholz, Nadelholz, tropische Hölzer, etc., jegliche verarbeiteten Hölzer sowie Holzverbundwerkstoffe, wie z.B. Brettschichtholz, Furnierstreifenholz, Furnierschichtholz, Leimholz, Schichtholzplatten, Spanplatten, Flachpressplatten, Kunststoff-faser-verstärktes Brettschichtholz, metallisch bewehrte Schichthölzer, faserverstärkte Spanplatten, technisch getrocknete und mit Kleber injizierte Hölzer, etc.

Die Auswahl des Klebers (Leimes) ist ein wesentlicher Bestandteil des Verbindungssystems, da er die Verbindung zwischen Holzwerkstoff und Anker erst herstellt. Es gibt Ein-,bzw. Zweikomponentenkleber, elastische und plastische Kleber, Kleber mit Füllstoffen, Feststoffen, sowie Faserpartikeln. Einige davon sind z.B.Phenol-Formaldehyde, Melamin-Formaldehyde, Polyester, Epoxidharze, Polyurethane, Harnstoffharze, etc. Die Kleber müssen je nach Einsatz so gewählt werden, daß sie während der gesamten Verwendungsdauer der Verbindung standsicher sind. Die Fugendicke ist ebenfalls eine wichtiges Kriterium zur Auswahl des Klebers. Eine Grundregel besagt, daß mit zunehmender Fugendicke die Festanteile des Klebers ebenfalls zunehmen sollen. Dabei muß das Zusammenspiel von Anker-Geometrie und Kleber immer beachtet werden. Fugendicken bis zu 4 mm werden bevorzugt verwendet.

Die Auswahl der Materialien der Anker ist ein weiterer Bestandteil der bestehenden Erfindung. Anker aus metallischem Material haben verschiedenste Vorteile. Weichmetalle, wie z.B. Bronze, Kupfer, Aluminium, etc. erlauben eine leichte Formbarkeit und bieten dem Holzwerkstoff ein hohes Maß an Flexibilität. Sie finden ihre Anwendung in Verbindungen, in denen relativ geringe Kräfte und Momente übertragen werden. Stahl, Edelstahl, etc. ist durch seine hohe Festigkeit, gute Verfügbarkeit, und Wirtschaftlichkeit als Anker geeignet. Gußstahl, Gußeisen etc. zeichnet sich durch die hohe Festigkeit und die gute Herstellbarkeit aus. Die Festigkeit läßt sich durch mineralische Verstärkungen zusätzlich variieren. Gußteile können in allen Formen und Gestaltungen erstellt werden. Diese Variante ist besonders für Serienfertigungen vorteilhaft. Anker aus Holzwerkstoffen erlauben stahlfreie Konstruktion, was für gewisse Bauvorhaben ein wichtiges Kriterium sein kann. Anker aus Kunststoffen, verstärkt und/oder unverstärkt, ermöglichen ebenfalls eine stahlfreie Konstruktion, lassen aber durch ihre hohe Festigkeit ähnliche Kraftflüsse zu wie z.B. Stahl oder Guß. Die Verstärkung der Kunststoffe erfolgt meist mit mineralischen Füllstoffen. Ein weiterer Vorteil für Anker aus Kunststoff ist die Gewichtseinsparung gegenüber metallischen Ankern. Einige heute erhältichen Kunststoffe unter den Duroplasten, Thermoplasten, sowie Elastomeren, sind Polyethylene, Polyacetal, Fluorpolymere, Polyamide, Polycarbonate, Polysulfate, Polyphenylsulfide, Lineare Epoxide. Verstärkte Kunststoff-Anker bieten heute den größten Kraft/Masse Quotienten. Anker aus Stahl-, Kunststoff-, Faser-, und/oder Keramik-Mischungen bieten dem Anwender fast unzählige Kompositionsmöglichkeiten.

Die geometrische Form, Gestalt und/oder Ausarbeitung der Anker ist beliebig in ein-, zwei-, und/oder dreidimensionaler Richtung, wie zum Beispiel, gerade, flach, rund, kreisförmig, zylindrisch, oval elliptisch, gewinkelt, quadratisch, gekrümmt, gebogen, und/oder geschwungen. Darüber hinaus sind die Anker solide, fest, gewebeartig, gitterförmig, netzartig, lochperforiert, geschlitzt, und/oder geteilt, und die Oberflächen der Anker oder Anker-Segmente glatt, flach, aufgerauht, gewölbt und/oder abgesetzt, enthalten Rillen, Ränder, und/oder Erhöhungen. Die Geometrie der Anker-Taschen ist je nach Verwendungszweck gleich oder ungleich der Geometrie der Anker.

Die "Werkstoffe jeder Art" beinhalten alle Werkstoffe die in irgend einer Art und Weise im Bauwesen verwendet werden, wie z.B. Metalle, Holzwerkstoffe, Natursteine, künstliche Steine, bewehrtes Mauerwerk, Beton, Spannbeton, Stahlbetonfertigteile, Betonverbundteile, Stahlbeton, Kunststoffe, Faserwerkstoffe, Kleber, Erde, Lehm, und/oder Böden jeglicher Art.

Das Verbindungssystem ist charakterisiert durch einen relativ "weichen" Anker-Teil und einen relativ "steifen" Anker-Teil und/oder Anker-Verlängerung. Der "weiche" Anker-Teil kann z.B. aus weichem bzw. elastischem Material bestehen, das die Verformungen des Holzwerkstoffes toleriert, und/oder einem harten, elastoplastischen, und/oder plastischen Material bestehen, das durch seine Form, Geometrie und/oder Gestaltung sich als "weich" auf den Holzwerkstoff auswirkt. Holzwerkstoffe werden als lebendes, weiches Material bezeichnet, das ständigen Bewegungen und Verformungen unterliegt. Dieser natürliche Prozess des Holzwerkstoffes darf nicht eingeschränkt werden.
Ein "steifer" Anker-Teil und/oder Anker-Verlängerung wird aus mehreren Gründen bevorzugt verwendet. Zum einen stabilisiert/verbindet er/sie den Anker und zum anderen erlaubt er/sie eine steife Verbindung mit Werkstoffen jeder Art, wie z.B. Stahl, Beton, etc. Des weiteren erlaubt diese Verfahrensweise dem Ingenieur das Gesamtsystem, Bauwerk, Objekt, etc. so zu konzipieren, daß er zwischen der Steifigkeit der Holzwerkstoffe, Anker, Anker-Verlängerung und/oder Werkstoffe jeder Art unterscheiden und diese nach Belieben manipulieren kann.

Die Erfahrung zeigte, daß für manche verwendeten Kleber die zu verbindenden Oberflächen des Ankers und/oder des Holzwerkstoffes besser kleben, wenn sie etwas rauh sind. Daneben gibt es allerdings auch Materialien und Werkstoffe, wo dies nicht nötig ist, wie z.B. Kunststoffe, Fasern, einige Metalle, etc. Die Aufrauhung kann durch mechanische und/oder chemische Behandlung erzielt werden, wie z.B. schleifen, feilen, flexen, kratzen, äzen, sandstrahlen, etc. Ein weiterer Vorteil dieser Behandlung ist das Säubern der Oberflächen vor dem Verkleben denn jede fehlerhafte Verklebung verringert den Wirkungsgrad der Verbindung.

Die Perforierung der Oberflächen und/oder Anker bietet mehrere Vorteile. Sie erhöht die Haftung der zu verklebenden Oberflächen und/oder reduziert das Gewicht des Ankers (dies ist allerdings nur von Bedeutung bei "schweren" Ankern, wie z.B. Stahl, Guß, etc.). Darüberhinaus ermöglichen Perforierungen dem Kleber eine schnellere, sicherere und/oder gleichmäßigere Verteilung auf beiden Oberflächenseiten des Ankers dadurch, daß der Kleber durch die Perforierung von einer Seite zur anderen gelangen kann. Diese Verfahrensweise ermöglicht eine kostengünstigere, schnellere und/oder sicherere Verklebung. Die Perforierung kann aus runden, ovalen, rechteckigen und/oder quadratischen Löchern, Schlitzen, etc. bestehen.

Eine Segmentierung der Anker hat einen ähnlichen Effekt wie die Perforierung. Darüberhinaus bietet sie einen weiteren entscheidenden Vorteil. Wie schon zuvor erwähnt unterliegen Holzwerkstoffe aufgrund ihrer heterogenen Eigenschaften Schwankungen in Querschnitt, Gestalt, Geometrie, Größe, etc. Diese Schwankungen werden von der Umwelt und/oder dem Umfeld des Einsatzortes des Verbindungssystems bestimmt, können durch Feuchtigkeit, Wärme, Temperatur, Atmosphäre, Lastschwankungen, Alterung, etc. hervorgerufen werden und richten sich nach der Größe des Holzwerkstoffes. Größenänderungen von mehreren Millimetern sind keine Seltenheit. Aus diesem Grund ist es notwendig, eine Verbindung herzustellen, die dem Holzwerkstoff ermöglicht diese Schwankungen zu tolerieren, ohne jeglichen oder mit vorbestimmtem Kapazitätverlust. Das Verkleben (implantieren) von Anker-Segmenten gibt dem Holzwerkstoff die benötigten Freiheitsgrade. Die Anzahl und/oder Größe der Vebinder-Segmente richtet sich z.B. nach dem Querschnitt des Holzwerkstoffes. Große Querschnitte unterliegen großen Verformungen, kleine Querschnitte kleinen. Ein weiteres Kriterium ist der Holzwerkstoff selbst. Es existieren Holzwerkstoffe, die sich unter gleichen Gegebenheiten unterschiedlich verhalten. Ungetrocknetes Naturholz z.B. wird wesentlich größere Form- und/oder Größenänderungen aufweisen als z.B. Furnierstreifenholz. Ein weiterer Faktor ist der Klebstoff selbst. Es gibt elastische oder plastische Kleber. Beide haben ihre Anwendungsmöglichkeiten und müssen demnach mit der Wahl der Anker-Segmente abgestimmt werden. Ein weiteres Kriterium ist der Einsatzort des Verbindungssystems. Zu unterscheiden sind grundsätzlich Innen- und Aussenanwendungen. Luftfeuchtigkeit, Temperatur und/oder Klimawechsel sind entscheidend für die Auswahl der Anker-Segmente. Ein letztes hier genanntes Kriterium ist die Belastungsart. Statische oder dynamische Lasten erfordern unterschiedliche Betrachtungsweisen. Die Anzahl der Anker-Segmente und Anker-Taschen müssen nicht übereinstimmen, das heißt, daß eine Anker-Tasche mehrere Anker-Segmente aufnehmen kann.

Den Abstand zwischen den einzelnen Anker-Segmenten bestimmen die vorgegebenen Verformungspunkte, Sollbruchstellen, Kohäsionsbruchstellen, etc. der Holzwerkstoffe. Sie können gemäß den Anwendungen variieren in Größe, Material, Dichtigkeit, etc. Sie können, beispielsweise aus Holzwerkstoffen, Papier, Karton, Kunststoff, Leim, Klebstoff und/oder Fasermaterial bestehen. Ein Bruch des Abstand-Halters der Anker-Segmente ermöglicht die Verformung des Holzwerkstoffes, ohne das Tragverhalten der Klebeverbindung zwischen Holzwerkstoff, Kleber und Anker zu beeinträchtigen.

Die Aufwölbungen, Ränder und/oder Steifen, etc. der Anker geben der Oberfläche ebenfalls eine gewisse Rauheit, was wiederum die Verklebung erleichtern kann. Vielmehr jedoch geben diese dem Anker eine gleichmäßigere Positionierung. Die Aufwölbungen, Ränder und/oder Streifen bieten einen annähernd gleichmäßigen Abstand zwischen dem Anker und der Anker-Tasche des Holzwerkstoffes. Das bedeutet, daß die Klebefugendicke annähernd konstant gehalten werden kann. Für jene Anker, die die Oberfläche des Holzwerkstoffes schneiden, bieten die Ränder eine Abdichtung der Klebfläche und verhindern somit ein Austreten des Klebers. Die Ränder können in unterschiedlichen Formen erstellt sein, z.B. rund, flach, kantig, eckig, etc.

Die aufsetzbaren Anker sind auf und/oder teilweise unter der Oberfläche der Holzwerkstoffe geklebt. Es gibt zahlreiche Anwendungen, wo die Ästhetik kein Entscheidungsfaktor ist für den Ingenieur, sondern die Wirtschaftlichkeit im Vordergrund steht. In solchen Fällen ist der Anker mit dem Äußeren des Holzwerkstoffes verbunden. Aufsetzbare Anker können mit der Oberfläche als reine Verklebung oder Verklebung und mechanische Verbindung ausgeführt werden. Die Verwendung von mechanischen Verbindungsmitteln erleichtert z.B. das Herstellen der Verbindung. Nach dem Verkleben hält das mechanische Verbindungsmittel (z.B. Nägel, Krallen, Schrauben, Stifte, Bolzen, Dübel, etc.) den Anker an seiner Position und ermöglicht ein sicheres Abbinden des Klebers.

Es gibt Anwendungen wo eine Kombination von einsetzbaren und aufsetzbaren Ankern Vorteile bietet. Solche Anwendungen zeigen meist eine relativ kleine Querschnittsform der Holzwerkstoffe auf, wo man Querschnittsverluste durch Anker-Taschen nicht erlauben kann und wo aufsetzbare Anker nicht sichtbar angeordnet werden können, wie z.B. Wintergartenbau, Pergolen, Gartenmöbel, Möbelindustrie, Spielzeuge, etc. Bei all diesen Ausführungsbeispielen ist es allerdings auch denkbar, einsetzbare und aufsetzbare Anker separat einzusetzten.

Das hier vorliegende erfindungsgemäße Verbindungssystem bietet dem Nutzer eine ganze Reihe von neuen Möglichkeiten, Holzwerkstoffe z.B. im Bauwesen sicherer, wirtschaftlicher, und ästhetischer einzusetzen. Die Serienfertigung im Ingenieurholzbau ist, verglichen mit andern Branchen, noch sehr stark unterentwickelt. Das Vorfertigen von Einzelteilen wird durch das neuartige Verbindungssystem erheblich verbessert. Die Holzwerkstoffteile und/oder Anker können im Serienfertigungsverfahren an beliebigen Orten und Zeiten vorgefertigt werden. Der Zusammenbau kann dann an einem weiteren und/oder dem gleichen Ort/Zeit passieren. Das Endprodukt sind Systemteile aus Holzwerkstoffen mit implantierten Ankern. Die Systemteile können dann entsprechend der Ausführungsplanung zu einem Tragsystem zusammengebaut werden.

Eine Serienfertigung des Verbindungssystems bringt eine Verbesserung in Qualität, Sicherheit, Herstellungskosten und/oder Ästhetik mit sich. Andere Industriezweige, wie z.B. Stahlbau, Stahlbetonbau, sowei Fertigteilsysteme, können sich "Holzwerkstoffe plus Implantat" anfertigen lassen. Damit wird z.B. dem Stahlbauer ermöglicht, ein Systemteil zu beziehen, das so konzipiert ist, wie er es gewohnt ist, nämlich als Anschlußmöglichkeit das Anziehen einer Schraube erfordert. Ermöglicht wird dies durch, in Holzwerkstoffe implantierte Anker mit Gewindemutter.

Das Verkleben der Anker, Anker-Verlängerungen mit dem Holzwerkstoff kann auf unterschiedlichste Art und Weise erfolgen. Ein Einkomponentenkleber kann zuvor und/oder nachdem Teile oder das ganze Verbindungssystem zusammengeführt wurden, auf die Einzelteile aufgebracht werden und/oder in die Anker-Taschen eingeleitet werden. Auftrage- und/oder Spritzvorrichtungen wären für Serienfertigungen eine Erleichterung. Diese Vorrichtungen können manueller oder maschineller Art sein, mit mechanischem, hydraulischem und/oder pneumatischem Antrieb.
Derartige Vorrichtungen mit Kontrolleinrichtungen wie z.B. Druckuhr, Volumenmessung, etc., zusammen mit der Oberflächenbeschaffenheit und dem entsprechenden Aufbau der Anker, sorgen für einen sicheren, schnellen, und gleichmäßigen Auftrag des Klebers.

Zweikomponentenkleber können bei sofortigem Mischen genauso behandelt werden wie der zuvor beschriebene Einkomponentenkleber. Ein weiterer Vorteil des Zweikomponentenklebers liegt allerdings darin, daß die unterschiedlichen Komponenten auf unterschiedliche Teile des Verbindungssystems aufgetragen werden können, und man entweder sofort oder erst später, z.B. auch an einem andern Ort, die Einzelteile zusammenführen kann und somit die Verklebung aktiviert. Die Klebeflächen kann man je nach Verklebungsverzögerung durch eine Verpackung, z.B. Folie, vor Feuchtigkeit/Verschmutzung schützen. Diese Verpackung könnte so ausgebilded sein, daß sie beim Verbinden nicht abgenommen werden muß, sondern zu einem Bestandteil der Verklebung wird.

Das Verbinden von Anker mit Ankern-Verlängerungen, Ankern mit Werkstoffen jeder Art, und/oder Anker-Verlängerungen mit Werstoffen jeder Art kann in allen bekannten Variationen des Bauwesens erfolgen, wie bereits in den Ansprüchen erwähnt. Diese Folgeverbindungen lassen sich gemäß den Anforderungen an das Bauwerk, Objekt, etc. elastisch oder plastisch anschließen. Die Verschieblichkeit bzw. der Schlupf lassen sich allerdings durch das neuartige Verbindungssystem genauer bestimmen und manipulieren. Verschieblichkeit, Verformbarkeit, Schlupf, Formspiel, etc. wurde zwischen Holzwerkstoff und Anker eliminiert. Jetzt ist es dem Ingenieur überlassen, ein mehr oder weniger weiches System zu planen und auszuführen. Die Steifigkeit eines Systems kann demnach wesentlich genauer als bisher bestimmt und ausgeführt werden. Nun besteht die Möglichkeit, z.B. für dynamische Beanspruchungen Dämpfer in Form von Federn in das Verbindungssystem mit einzubauen, ohne Einflüsse aus der zuvor genannten Verformung zu haben, da diese jetzt eliminiert ist.

Weitere Merkmale und Vorteile der Erfindung ergeben sich aus den folgenden Beschreibungen von Ausführungsbeispielen. Wegen der Vielzahl der Anwendungsmöglichkeiten des neuartigen Verbindungssystems können allerdings nur einige Beispiele aufgeführt werden.

FIG. 1 zeigt eine Seitenansicht des Verbindungssystems mit seinen wesentlichen Bestandteilen, wie Holzwerkstoff, Anker, Kleber, Anker-Taschen, Anker-Verlängerung, Werkstoff jeder Art.

FIG. 2 bis FIG. 7 zeigen isometrische Explosionsdarstellungen von Teilen des Verbindungssystems mit Variationen der Anker.

FIG. 8 und FIG. 9 zeigen isometrische Explosionsdarstellungen von Verbindungssystemen.

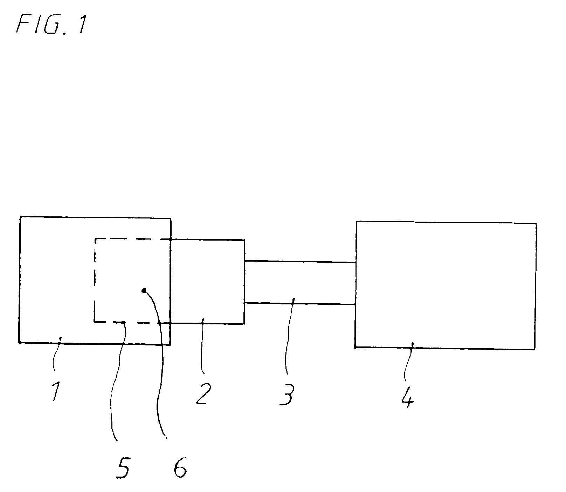

Fig. 1 zeigt eine Seitenansicht eines prinzipiellen Verbindungssystems mit Holzwerkstoff 1, Anker 2, Anker-Verlängerung 3, Werkstoffe jeder Art 4, Anker-Taschen 5 und Kleber 6. Der Anker 2 kann als einsetzbarer und/oder aufsetzbarer Anker betrachtet werden. Einsetzbare Anker können auch als Anker-Implantate oder auch nur Implantate bezeichnet werden. Bei einem aufsetzbaren Anker ist die Anker-Tasche nicht notwendig, außer man benötigt eine Anker-Einbettung, um den aufsetzbaren Anker teilweise in die Oberfläche des Holzwerkstoffes einzulassen. Die Anker-Verlängerung 3 kann auch so ausgeführt sein, daß der Anker und die Anker-Verlängerung ein und dasselbe ist, das heißt beides als Anker angesehen werden kann. Der Anker 2 kann elastisch, plastisch und/oder unverschieblich mit dem Holzwerkstoff 1 verklebt sein. Der Anker 2, die Anker-Verlängerung 3 und/oder der Werkstoff jeder Art 4 können z.B. elastisch, plastisch, abnehmbar, fest, permanent, vorübergehend, etc. miteinander verbunden sein. Die Art dieser Verbindung umfaßt alle verwendeten Möglichkeiten im Bauwesen, z.B. schweißen, schrauben, nageln, verbolzen, verhaken, vergießen, verschmelzen, etc.

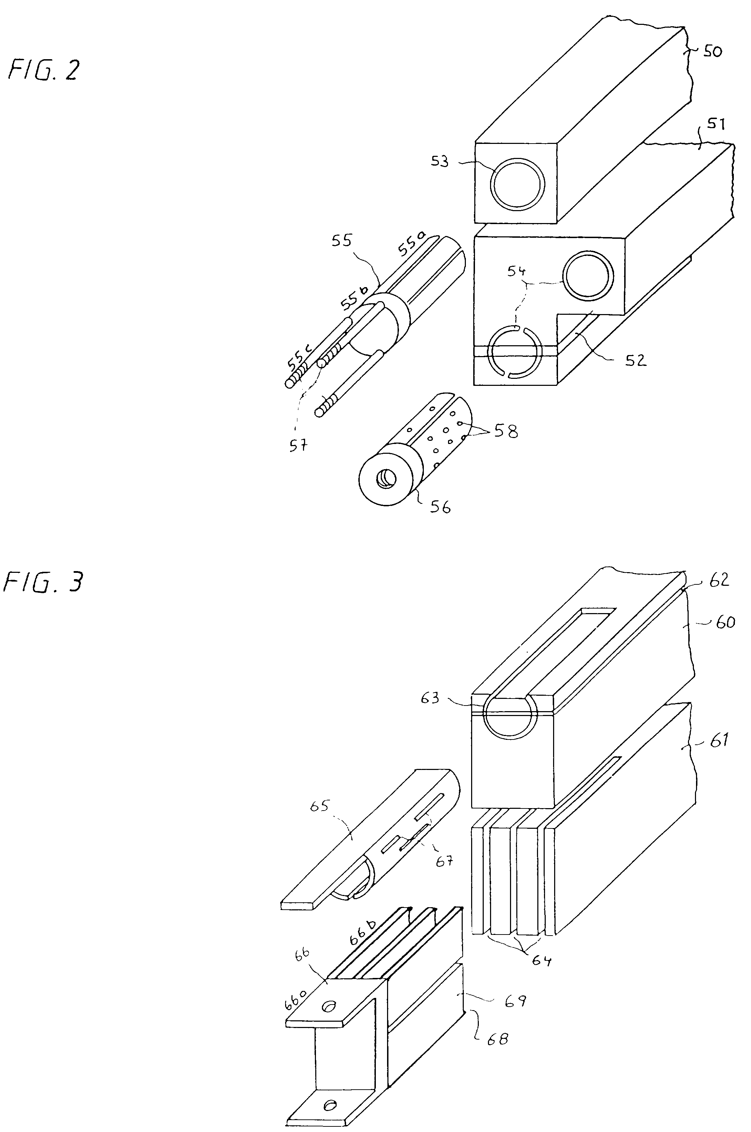

FIG. 2 zeigt eine isometrische Explosionsdarstellung des Holzwerkstoffes 50, 51 (Holzwerkstoff 51 zeigt beispielhaft eine Bewehrung 52), Anker-Taschen 53, 54 und die Anker 55, 56. Der Holzwerkstoff 50 besteht beispielhaft aus Brettschichtholz. Die Anker-Tasche 53 ist z.B. mit einem Ringbohrer in den Holzwerkstoff 50 eingearbeitet worden. Der Anker 55, gefertigt aus z.B. Stahl St 37 oder St 50, besteht aus geraden und gebogenen Anker-Segmenten 55a, einem flachen kreisförmigen Zylinder 55b, und drei einzelnen, schlanken kreisförmigen Zylindern 55c, welche Gewinde 57 an einem Ende aufweisen. Die Teile 55b und 55c könnte man auch als Anker-Verlängerung betrachten. Der Abstand zwischen den Anker-Segmenten 55 ist beispielhaft mit Kleber, hier Epoxydharz, während des Klebevorgangs ausgefüllt. Der selbe Kleber wird auch für die Verankerung des Ankers 55 im Holzwerkstoff 50 verwendet. Der Anker 55 erlaubt eine Weiterleitung von Zug-, und Druckkräften, Querkräften und Momenten. Ein solches Verbindungssystem könnte als Stab in einem Fachwerksystem, als Stütze, Gartenpfosten, etc. eingesetzt werden.
Der Holzwerkstoff 51 ist ein Winkelprofil aus z.B. Brettschichtholz mit einer Bewehrung 52 in einem Schenkel liegend. Diese Bewehrung 52, bzw. Verstärkung ist hier beispielhaft eine Kunststoff-Faser. Die Anker-Taschen 54 wurden hier unter anderen Möglichkeiten mit einem computergesteuerten Maschinenfräser eingearbeitet. Der Anker 56 ist z.B. aus verstärktem Kunststoffverbundwerkstoff. Hergestellt wurde er in einem Stück. Die Oberfläche ist durch die Art und Weise der Herstellung leicht angerauht und anschließend mit einer chemischen Lösung behandelt. Der Anker 56 hat eine Lochperforierung 58. Das gleiche Verbindungssystem wäre auch denkbar ohne Bewehrung 52. In diesem gezeigten Beispiel wird ein Holzwerkstoff 51 zweimal mit dem gleichen Anker-Typ 56 versehen. Dieses Verbindungssystem ist in der Lage, Zug-und Druckkräfte, Querkräfte und Momente aufzunehmen. In diesem Fall können sogar relativ große Momente übertragen werden, da die Anker 56 durch einen Hebelarm agieren können. Dieser Systemstab eignet sich beispielsweise sehr gut für Stützen, Riegel, Containerbau, Möbelbau, etc.

FIG. 3 zeigt eine isometrische Explosionsdarstellung eines Holzwerkstoffes 60 der eine Verstärkung 62 beinhaltet, einem Holzwerkstoff 61, Anker-Taschen 63, 64, und Ankern 65, 66.
Der Holzwerkstoff 60 besteht, z.B. aus mechanisch getrocknetem Schnittholz mit einer Verstärkung 62 aus z.B. Stahlgewebe. Die Anker-Tasche 63 ist in diesem Fall mit einem Laserschneidwerkzeug hergestellt. Dieses Laserverfahren ist so konzipiert, daß es die Oberflächen des Holzwerkstoffes 60 und der Verstärkung 62 nicht beschädigt. Der Anker 65 ist eine Kombination aus einsetzbarem und aufsetzbarem Anker. Er ist in diesem Fall im Gußverfahren hergestellt. Er wurde so aufgebaut, daß er die Verstärkung 62 umschließt und jegliche weitere Verbindung mit Werkstoffen jeder Art erlaubt. Dieser weitere Anschluß wird durch eine entsprechende Anker-Verlängerung bestimmt. Der Anker 65 ist mit Schlitzen 67 versehen. Die Form der Schlitze ist nicht limitiert. Sie können auch z.B. oval, gekrümmt, geschwungen, etc. sein. Im Falle einer Verbindung mit verstärktem Holzwerkstoff wie in dem gezeigten Beispiel ist es jedoch ratsam, keine Schlitze im Bereich Berührungsfläche Anker-Verstärkung anzuordnen. Eine solche Verbindung ist in der Lage Zug-und Druckkräfte, sowie Querkräfte aufzunehmen. Kleine Momente können durch den Anker 65 übertragen werden, größere Momente allerdings sollten über ein Kräftepaar (Anker und Holzwerkstofffläche), aufgenommen werden, was ja in diesem Fall auch möglich ist.

Der Holzwerkstoff 61 ist beispielsweise Furnierschichtholz, bzw. Furnierstreifenholz. Die Anker-Taschen 64 wurden in diesem Fall mit einer Kreissäge erstellt. Der Anker ist z.B. aus Edelstahl, wie V2A bzw. V4A, etc. und somit rostfrei.
Der Anker 66 ist durch ein U-Profil 66a und sechs Flachkörper-Segmente 66b aufgebaut. Die Flachkörper-Segmente 66b des Ankers 66 sind aufgerauht 69, um die Reibung zu erhöhen und eine gleichmäßige Positionierung in den Anker-Taschen 64 zu erreichen. Die Flachkörper 66b besitzen teilweise einen Rand 68, welcher den Kleber am austreten hindern soll. Die segmentierten Flachkörper 66b des Ankers 66 erlauben durch ihren Aufbau dem Holzwerkstoff 61 Freiheitsgrade. Demnach kann der Holzwerkstoff 61 entsprechend der äußeren Einflüsse durch Temperatur, Feuchtigkeit, etc. seine Form in Grenzen verändern, ohne daß die Tragkraft des Verbindungssystems beeinflußt wird. Darüber hinaus sorgt das U-Profil 66a für einen "steifen" Anschluß des Ankers 66 mit einer Anker-Verlängerung und/oder einem Werkstoff jeder Art, den Verbund der sechs Anker-Segmente 66b und eliminiert bzw. reduziert gleichzeitig die Querzugspannungen, die auf den Holzwerkstoff 61 wirken. Diese Verbinungen sind in der Lage Zug- und Druckkräfte, Querkräfte und Momente aufzunehmen und finden ihren Einsatz in den verschiedensten Bereichen des Bauwesens.

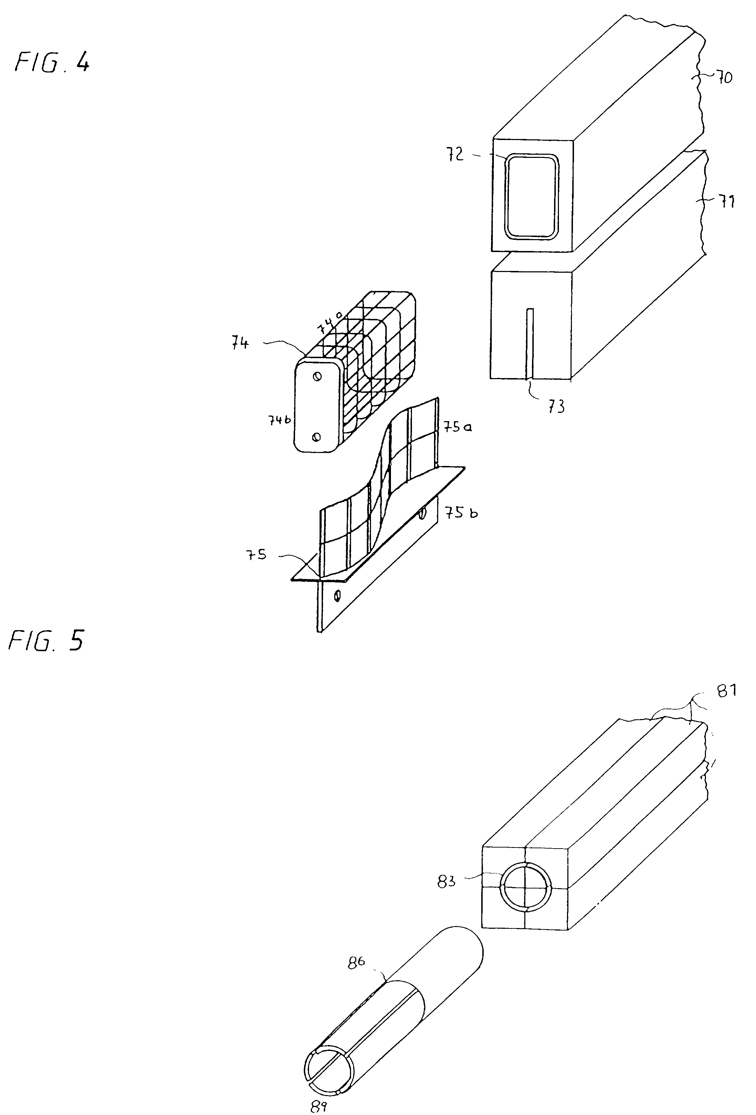

FIG. 4 zeigt eine isometrische Explosionsdarstellung von Holzwerkstoffen 70, 71, Anker-Taschen 72, 73 und Ankern 74, 75. Die Holzwerkstoffe 70, 71 sind hier beispielhaft aus "Engineered wood products", wie Furnierschichtholz, Furnierstreifenholz, etc., die z.B. TrusJoistMacmillan, Boise, Idaho, USA herstellt. Sie zeichnen sich durch höhere Belastbarkeit aus. Bislang konnten aber diese Reserven nicht aktiviert werden, da herkömmliche Verbindungslösungen, wie z.B. Schlitzbleche mit Bolzen, Schrauben oder Nagelverbindungen, nicht die volle Kapazität ausschöpfen konnten. Das neuerungsgemäße Verbindungssystem hingegen ist in der Lage, diese Kräfte wirtschaftlich zu übertragen.
Die Anker-Taschen 72, 73 sind beispielsweise mit Kettenstemmern, Fräsen, etc. eingearbeitet worden. Der Anker 74 zeigt einen Teil 74a, der z.B. als Gewebe, Netzwerk, und/oder Gerippe ausgebildet ist und eine Platte 74b mit zwei Bohrungen zur weiteren Verbindung mit Anker-Verlängerungen und/oder Werkstoffen jeder Art. Der Anker 74 könnte z.B. aus einem Material in einem Verfahrensgang hergestellt sein. Jede andere Art und Weise der Herstellung ist auch denkbar. Nachdem der Anker 74 im Holzwerkstoff 70 verklebt ist kann dieser Anschluß zur Aufnahme von Zug- und Druckkräften, Querkräften und Momenten herangezogen werden. Die Wahl des aufgelösten Anker-Teils 74a erlaubt eine sehr "weiche" Verbindung mit dem Holzwerkstoff 70. Darüberhinaus ist es möglich, die Anker-Taschen 72 sehr schmal auszuführen, was zu einer minimalen Schwächung des Holzwerkstoffes 70 führt und demnach einen hohen Wirkungsgrad an Belastung pro Holzwerkstoff-Querschnittsfläche ermöglicht. Außerdem kann die Verbindung dadurch sehr leicht ausgeführt werden.
Der Anker 75 erscheint ebenfalls als Gewebe, Gitter, Netz, etc. 75a, welches wellenförmig aufgebaut ist und als T-Profil 75b, welches den "steifen" Teil des Ankers 75 darstellt.
Die Verbindungsbeispiele können zur Aufnahme von Zug-, Druckkräften, Querkräften und Momenten herangezogen werden. Sie finden ihre Anwendung als Stützen, Balken, Fachwerkstäbe, Streben, Sparren, etc.

FIG. 5 zeigt eine isometrische Explosionsdarstellung eines Holzwerkstoffs 81, einer Anker-Tasche 83, und eines Ankers 86. Die hier gezeigten das Beispiele ist eine Darstellung eines Verbindungssystems, einen Anker 86 mit vier individuellen Holzwerkstoff-Segmenten 81 verbindet. Der Anker 86 ist hier ein Stahlrohr, welches zum Teil mit Schlitzen 89 versehen ist. Dieses Beispiel zeigt ein Verbindungssystem, indem sich die Steifigkeit der Anker 86 mit der Steifigkeit der Holzwerkstoffe 81 abwechselt, oder mit andern Worten: die Segmente des Holzwerkstoffes 81 werden durch einen Anker 86 kraftschlüssig verbunden. Die zweite, "weichere" Hälfte des Ankers 86 könnte z.B. mit einem Werkstoff jeder Art in Form eines Holzwerkstoffes verklebt werden.
Das Beispiel könnte seine Anwendung im Wohnungsbau finden und z.B. als Stützen, Schwellen, Riegel, Pfetten, Gartenanlagen, etc. ausgebildet werden.

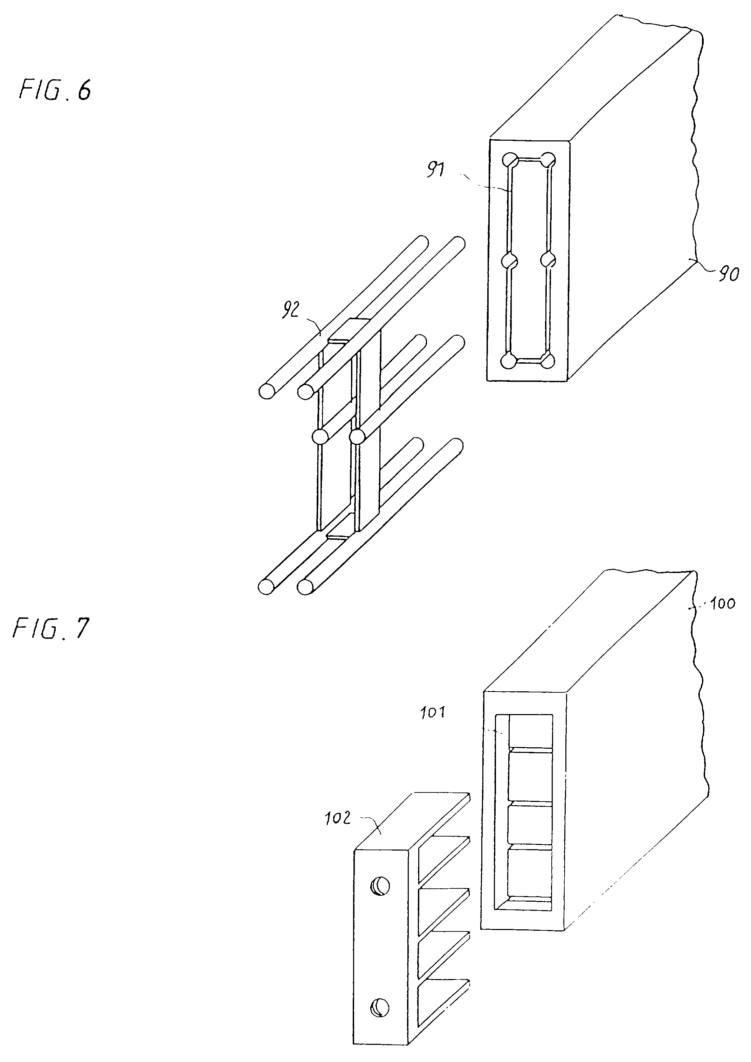

FIG. 6 zeigt eine isometrische Explosionsdarstellung vom Holzwerkstoff 90, Anker-Taschen 91, und Anker 92. Dieses Beispiel zeigt eine weitere Kombination von Anker-Segmenten unterschiedlichster Gestaltung, Abmessung und Form zu einem Anker 92. Wiederum ist dies eine Ausführung von einem "weichen" und einem "steifen" Teil eines Ankers. Die Ausarbeitung der Anker-Taschen 91 könnte durch Sägen, Bohren und/oder Fräsen erfolgen. Diese Ausführung eines Verbindungssystems läßt Teile des Ankers 92 über die Oberfläche des Holzwerkstoffes 90 herausragen. Diese Verbindung eignet sich für den Anschluß von Zug-, Druckkräften, Querkräften und Momenten. Sie findet ihre Anwendung z.B. in Stützeneinspannungen, Verbundbauweise mit Stahlbeton, Stahl, etc.

FIG. 7 zeigt eine isometrische Explosionsdarstellung vom Holzwerkstoff 100, Anker-Taschen 101, und Anker 102. Der Anker 102 ist wiederum durch einen "weicheren" (Flachkörpersegmente) und einen "steifen" Teil (Kopfplatte) dargestellt. In dieser Art der Ausführung ist der Anker 102 in den Holzwerkstoff eingelassen und ist entweder bündig mit oder tiefer als die Oberfläche des Holzwerkstoffes 100. Dies ist eine charakteristische Form des Implantates, da sich der Anker 102 in den Holzwerkstoff integriert. Diese Verbindung ist zur Aufnahme von Zug-, Druckkräften, Querkräften und Momenten geeignet. Anwendungsbeispiele sind Stützen, Binder, Pfetten, Rahmen, Riegel, Balken, Pergolen, Möbeln, Gartenanlagen, etc.

Objekten 110, 111, 112, 113 verbunden sind. Der Anker 115 ist hier beispielsweise eine Nagelplatte, Lochblech, etc. der dadurch gekennzeichet ist, daß die nägelartigen Stifte 118 aus dem Blech gestanzt sind. Diese Form der Befestigung wird in den verschiedensten Variationen bereits angewendet. Ein Hersteller ist z.B. Gang Nail. Der Anker 114 ist hier beispielhaft eine Nagelplatte Lochblech, etc. der dadurch gekennzeichnet ist, daß nägelartige Stifte 116 mit der Platte verbunden sind oder durch vorhandene Löcher eingeschlagen werden. Solche Anker sind oft auch dadurch gekennzeichnet, daß Schlitze 117 vorhanden sind. Diese Schlitze 117 tragen zu einer Verringerung des Gewichtes des Ankers 114 bei und ermöglichen bei richtiger Positionierung eine gewisse Flexibilität der Objekte 110, 111, 112, 113. Sehr überraschend hat sich gezeigt, daß die Kapazität eines solchen Anschlusses durch ein zusätzliches Verkleben der Anker 114, 115 erheblich erhöht werden kann. Des weiteren verringert sich die Verformung des kombinierten Verbindungssystems deutlich gegenüber einer rein mechanischen Verbindung. Diese erheblichen Verbesserungen erzielt man auch schon durch punktweise/flächenweise Verklebung der einzelnen Holzwerkstoffe mit den Ankern 114, 115. Die punktweise bzw. flächenweise Verklebung der Holzwerkstoffe hat den Vorteil, daß die unter bestimmten Bedingungen so notwendige Verformungsfreiheit der Holzwerkstoffe gewährt wird. Die Herstellung dieses Verbindungssysyms könnte beispielsweise so erfolgen, daß vor dem befestigen der Anker 114, 115 durch mechanische Verbindungsmittel die Holzwerkstoffe, und/oder Anker mit Kleber benetzt werden. Während des Aushärtens des Klebers übernehmen die mechanischen Verbindungsmittel die Stabilisierung, wohingegen im Gebrauchszustand des Verbindungssystems nur die Klebeverbindung oder die Klebeverbindung zusammen mit der mechanischen Verbindung die Stabilität erzielt. Es sind ebenfalls Ausführungen denkbar, wo die Anker und Holzwerkstoffe mehrlagig angeordnet werden.

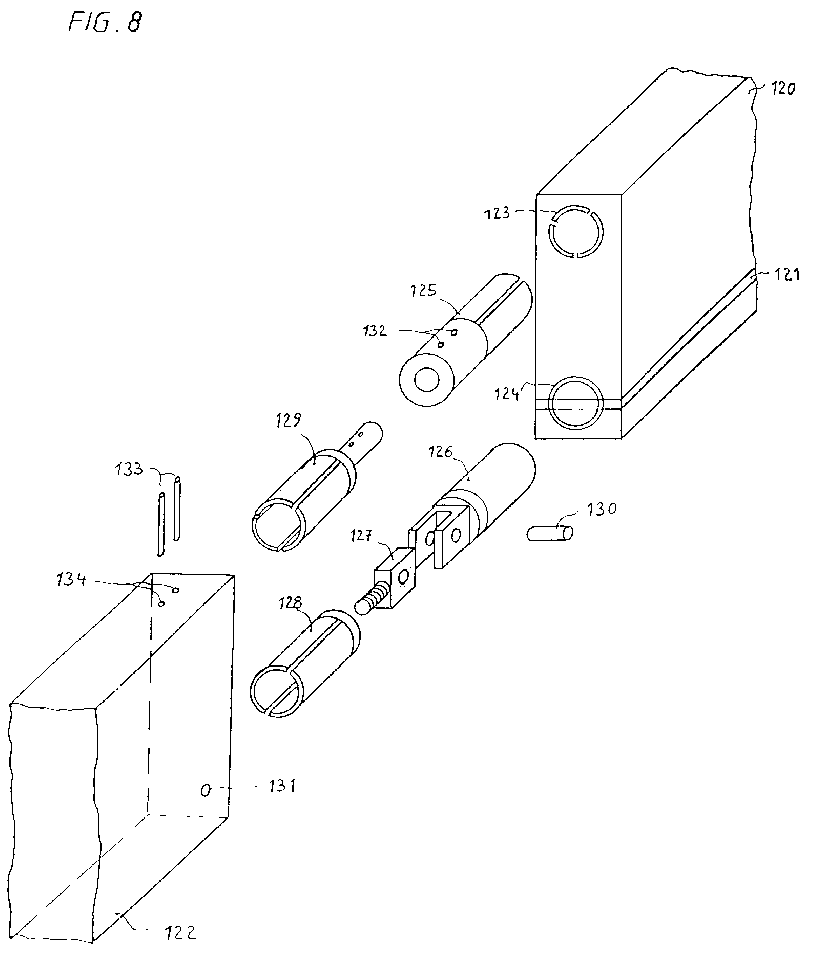

FIG. 8 zeigt eine isometrische Explosionsdarstellung von Holzwerkstoff 120, Verstärkung 121, Anker-Taschen 123, 124, Anker 125, 126, Anker-Verlängerungen 127, 128, 129, 130, 133, Werkstoffen jeder Art 122, in denen Löcher bzw. Bohrungen 131, 134 enthalten sind. Die Anker-Verlängerungen 128, 129 könnten in diesem Beispiel auch als Anker bezeichnet werden, da der Werkstoff jeder Art 122 ein Holzwerkstoff ist.
Dieses Verbindungssystem wurde so gewählt, daß die Anker 125, 126 und die Anker-Verlängerungen 127, 128, 129, 130, 133 in den Holzwerkstoff 120 bzw. Werkstoff jeder Art 122 integriert sind, so daß der Beobachter im Gebrauchszustand nur die Holzwerkstoffe 120 und Werkstoffe jeder Art 122 sieht. Eine derartige Ausführung erlaubt sehr ästhetische, stahlfreie Verbindungen und demnach eine Verbesserung der Standsicherheit im Brandfall.
Die Löcher bzw. Bohrungen 131, 134 können so ausgeführt werden, daß sie im Durchmesser größer sind als die Anker-Verlängerungen 130, 133 und es dadurch ermöglichen, den Kleber in die Bohrungen einzuführen, nachdem alle Teile bereits verbunden sind. In einer speziellen Ausführung könnte ein Verbindungsschlitz zwischen den Anker-Taschen 123, 124 vorhanden sein, der es ermöglichen würde, Luft bzw. Kleber aus den Bohrungen 133 austreten zu lassen während er in der Bohrung 131 eingeführt wird.
In einer anderen Ausführung wird das Herstellungsverfahren so gewählt, daß die Anker 125, 126 in den Anker-Taschen 123, 124 des Holzwerkstoffes 120 implantiert werden und erst zu einem späteren Zeitpunkt, womöglich an einem anderen Ort die restliche Objekte des Verbindungssystems miteinander verbunden werden. In diesem Fall erlaubt das Verbindungssystem eine Vorfertigung von Einzelteilen, die zu einem Gesamtsystem verbunden werden. Solche Systeme sind unter anderem Brücken, Hallen, Stadien, Kommunalbauten, etc.
Das Umschnüren der Verstärkung 121 durch die Anker-Tasche 124 und den Anker 126 hat durch Tests überraschend gezeigt, daß dies eine sehr effiziente Verbindungsform ist. Der Holzwerkstoff 120 überträgt auf beiden Seiten der Verstärkung 121 nicht so große Kräfte wie in der Verstärkung 121 selbst, sondern nur einen gewissen Teil davon. Durch Umschließung dieser hochbelasteten Bereiche überträgt der Anker 126 die Kräfte da, wo sie auftreten. Die Verstärkung 121 zeigt qualitativ einen Bereich des gesamten Holzwerkstoffes 120, der höhere Festigkeit besitzt als andere Bereiche. Diese Verstärkung 121 kann ganze Teile des Querschnitts einnehmen und erzielt werden durch z.B. Holzwerkstoffarten höherer Güte, Art, Festigkeit, und/oder Beschaffenheit, durch Materialien wie Kunststoffasern, metallische Verbundwerkstoffe und/oder Kompositionen aus anderen Werkstoffen jeder Art.
Das Verbindungssystem ist in der Lage, Zug- Druckkräfte, Querkräfte und Momente aufzunehmen und weiterzuleiten. In Teilen könnte diese Verbindung auch als Binder, Stütze, Rahmen, Riegel, Kragarm, etc. eingesetzt werden.

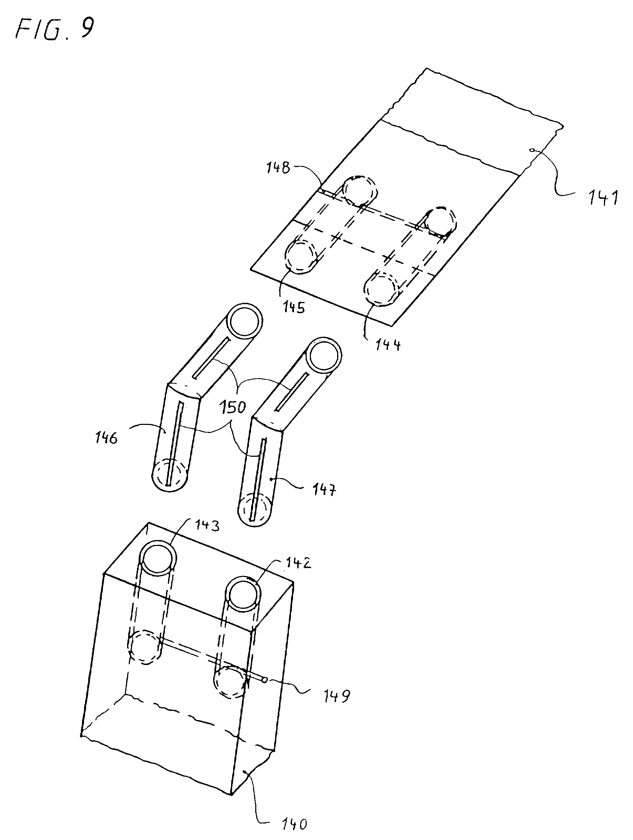

FIG. 9 zeigt eine isometrische Explosionsdarstellung von Holzwerkstoffen 140, 141, Verbinder-Taschen 142, 143, 144, 145, Ankern 146, 147 und Entlastungsbohrungen 148, 149. Die Anker 146, 147 haben mehrere Schlitze 150 und sind in ihrer Achse gekrümmt. Diese Art der Verbindung findet ihre Anwendung in vielen Bereichen, z.B. Stützen, Rahmensystemen, Dachtragwerken, Containern, räumlichen Tragwerken, etc. Die Anker 146 und 147 könnten auch untereinander durch Stäbe, Platten, etc. verbunden sein, um die Querzugspannungen der Holzwerkstoffe zu reduzieren oder zu eliminieren.
Die Entlastungsbohrungen 148, 149 wurden so angeodnet, daß sie die Anker-Taschen 142, 143, 144, 145 schneiden. Man sollte allerdings darauf achten, den Durchmesser der Bohrungen nicht zu groß zu wählen um den Querschnitt der Holzwerkstoffe nicht zu schwächen. In solchen Fällen würde sich eine flache, schlanke, gedrungene Form der Entlastungsbohrungen 148, 149, wie z.B. rechteckig, oval, schlitzförmig, zwei ineinandergreifende Kreise, etc., anbieten. Dieses Verbindungssystem zeigt dem Beobachter wiederum nicht die Anker bzw. Anker-Taschen. Es bietet demnach Vorteile in der Ästhetik und im Brandverhalten des Systems.
Die Abwinkelung der Anker 146, 147 kann in jeglichen anderen Graden erfolgen und auch drei-dimensional ausgebildet werden. Eine drei-dimensionale Knotenausbildung mit dem neuartigen
Verbindungssystem bietet eine Reihe von vorteilhaften, neuen Lösungen in der Ästhetik, im Wirkungsgrad des Kraftflusses, sowie bei Herstellung, Transport, Montage, Kosten, etc.

## Patentansprüche

1. Anker zur Verbindung eines Holzteils mit einem Bauteil beliebigen Werkstoffs in einer tragenden Holzkonstruktion, **dadurch gekennzeichnet**, daß der Anker (55, 56, 66, 74, 75, 86, 92, 102 125, 126, 127, 128, 129, 146, 147) einen mit dem Holzteil zu verklebenden, verformbaren Abschnitt (55a, 58, 66b, 74a, 75a, 125, 128) und einen steifen, an dem Bauteil anzubringenden Abschnitt (55b, 56, 66a, 74b, 75b) aufweist.

2. Anker nach Anspruch 1, **dadurch gekennzeichnet**, daß der Anker (129) ein Arretierungsmittel (133) aufweist.

3. Anker nach Anspruch 2, **dadurch gekennzeichnet**, daß das Arretierungsmittel einen den Anker (129) durchsetzenden Arretierungsstift (133) aufweist.

4. Anker nach Anspruch 1, **dadurch gekennzeichnet**, daß der verformbare Abschnitt Segmente aufweist.

5. Anker nach Anspruch 4, **dadurch gekennzeichnet**, daß die Segmente Hohlzylindersegmente (55a) sind.

6. Anker nach Anspruch 4, **dadurch gekennzeichnet**, daß der steife Abschnitt des Ankers Flachkörper-Segmente (66a) aufweist, die von einer Seite des Ankers (66, 102) abstehen.

7. Anker nach Anspruch 6, **dadurch gekennzeichnet**, daß die Flachkörper-Segmente (66b) parallel zueinander und mit Abstand von einander angeordnet sind.

8. Anker nach Anspruch 1, **dadurch gekennzeichnet**, daß der verformbare Abschnitt ein Gitter (74a, 75a) aufweist.

9. Anker nach Anspruch 4, **dadurch gekennzeichnet**, daß die Segmente stabförmig sind.

10. Anker nach einem der vorhergehenden Ansprüche, **dadurch gekennzeichnet**, daß der Anker (55, 56, 66, 74, 75, 86, 92, 102, 125, 126, 127, 128, 129, 146, 147) aus einem verstärkten Kunststoff besteht.

## Claims

1. Anchor for connecting a wooden part with a component made out of any material desired in a load-bearing wooden structure, characterized by the fact that the anchor (55, 56, 66, 74, 75, 86, 92, 102, 125, 126, 127, 128, 129, 146, 147) exhibits a moldable section to be bonded with the wooden part (55a, 58, 66b, 74a, 75a, 125, 128) and a rigid section to be secured to the component (55b, 56, 66a, 74b, 75b).

2. Anchor according to Claim 1, characterized by the fact that the anchor (129) exhibits a locking device (133).

3. Anchor according to Claim 2, characterized by the fact that the locking device exhibits a locking pin (133) that passes through the anchor (129).

4. Anchor according to Claim 1, characterized by the fact that the moldable section exhibits segments.

5. Anchor according to Claim 4, characterized by the fact that the segments are hollow cylinders (55a).

6. Anchor according to Claim 4, characterized by the fact that the rigid section of the anchor exhibits flat segments (66a) that project from one side of the anchor (66, 102).

7. Anchor according to Claim 6, characterized by the fact that the flat segments (66b) are parallel to each other and spaced apart from one another.

8. Anchor according to Claim 1, characterized by the fact that the moldable part exhibits a grid (74a, 75a).

9. Anchor according to Claim 4, characterized by the fact that the segments are rod-shaped.

10. Anchor according to one of the preceding claims, characterized by the fact that the anchor (55, 56, 66, 74, 75, 86, 92, 102, 125, 126, 127, 128, 129, 146, 147) consists of a reinforced plastic.

## Revendications

1. Ancrage pour la fixation d'une pièce de bois avec un composant d'un matériau quelconque dans une construction en bois porteuse, caractérisé par le fait que l'ancrage (55, 56, 66, 74, 75, 86, 92, 102, 125, 126, 127, 128, 129, 146, 147) présente une portion déformable (55a, 58, 66b, 74a, 75a, 125, 128) à coller avec la pièce de bois et une portion rigide (55b, 58, 66b, 74a, 75a, 125, 128) à appliquer sur le composant.

2. Ancrage selon la revendication 1, caractérisé par le fait que l'ancrage (39) présente un moyen de verrouillage (133).

3. Ancrage selon la revendication 2, caractérisé par le fait que le moyen de verrouillage présente une goupille de verrouillage (133) à faire passer à travers l'ancrage (129).

4. Ancrage selon la revendication 1, caractérisé par le fait que la portion déformable présente des segments.

5. Ancrage selon la revendication 4, caractérisé par le fait que les segments sont des segments de cylindre creux (55a).

6. Ancrage selon la revendication 4, caractérisé par le fait que la portion rigide de l'ancrage présente des segments formant des éléments plats (66a) qui saillent d'un côté de l'ancrage (66, 102).

7. Ancrage selon la revendication 6, caractérisé par le fait que les segments formant éléments plats (66b) sont disposés parallèlement l'un à l'autre et à une certaine distance l'un de l'autre.

8. Ancrage selon la revendication 1, caractérisé par le fait que la portion déformable présente un grillage (74a, 75a).

9. Ancrage selon la revendication 4, caractérisé par le fait que les segments sont en forme de tige.

10. Ancrage selon l'une des revendications précédentes, caractérisé par le fait que l'ancrage (55, 56, 66, 74, 75, 86, 92, 102, 125, 126, 127, 128, 129, 146, 147) est constitué d'un plastique armé.
